# EUROPEAN PATENT APPLICATION

(11) **EP 3 032 376 A1**
(43) Date of publication of application: **15.06.2016**
(21) Application number: 15197926.7
(22) Date of filing: 04.12.2015
(51) Int. Cl.: G06F 3/00, H04N 5/232, G06K 9/00

(54) **IMAGE RECOGNITION SYSTEM, SERVER APPARATUS, AND IMAGE RECOGNITION METHOD**

(30) Priority: 10.12.2014 JP 2014250080
(71) Applicant: Ricoh Company, Ltd., Tokyo 143-8555 (JP)
(72) Inventor: KASAHARA, Ryosuke, Tokyo, 143-8555 (JP)
(74) Representative: Schwabe - Sandmair - Marx

(57) **Abstract**

An image recognition system (100) according to an embodiment includes at least one camera (10) and a server apparatus (20). The camera (10) includes an imaging unit (12) that acquires a captured image and a first communication unit (11) that transmits the captured image to the server apparatus (20). The server apparatus (20) includes: a second communication unit (21) that, when receiving an image recognition request including first identification information for identifying the camera (10) and second identification information for identifying an image recognition process, transmits an image capture request to the camera (10) identified by the first identification information and receives the captured image from the camera (10) identified by the first identification information; and a recognition unit (22) that performs the image recognition process identified by the second identification information for the received captured image. The second communication unit (21) transmits information indicating a result of the image recognition process identified by the second identification information to a designated apparatus.

## Description

### 1. Field of the Invention

The present invention relates to an image recognition system, a server apparatus, and an image recognition method.

### 2. Description of the Related Art

With the development of a communication environment, a service business, which is called a cloud computing service or is simply called a cloud service, has been generally provided. In the cloud service, a user receives a service from the other side through the Internet and pays a service charge. In addition, in recent years, an image recognition processing algorithm has been developed which identifies a person in an image or recognizes the common name of an object in an image.

Japanese Laid-open Patent Publication No. 2011-90348 discloses an advertisement management system which acquires advertising information related to image data using an image recognition process. Japanese Laid-open Patent Publication No. 2001-88912 discloses a stocktaking management method which captures images of products that are actually displayed on a display stand using a plurality of cameras and recognizes the images and a stocktaking system using image recognition. JP 4061821 B1 discloses a video server system which provides an open business platform capable of using image information for multiple purposes in various networks.

However, in the technique according to the related art, it is necessary to construct systems for services each in order to provide services using various image recognition processes.

In view of the above-mentioned problems, there is a need to provide an image recognition system, a server apparatus, and an image recognition method which can easily provide services using various image recognition processes.

### SUMMARY OF THE INVENTION

It is an object of the present invention to at least partially solve the problems in the conventional technology.

According to exemplary embodiments of the present invention, there is provided an image recognition system comprising: at least one camera; and a server apparatus, wherein the camera includes: an imaging unit that acquires a captured image; and a first communication unit that transmits the captured image to the server apparatus, the server apparatus includes: a second communication unit that, when receiving an image recognition request including first identification information for identifying the camera and second identification information for identifying an image recognition process, transmits an image capture request to the camera identified by the first identification information and receives the captured image from the camera identified by the first identification information; and a recognition unit that performs the image recognition process identified by the second identification information for the received captured image, and the second communication unit transmits information indicating a result of the image recognition process identified by the second identification information to a designated apparatus.

Exemplary embodiments of the present invention also provide a server apparatus that is connected to at least one camera, comprising: a communication unit that, when receiving an image recognition request including first identification information for identifying the camera and second identification information for identifying an image recognition process, transmits an image capture request to the camera identified by the first identification information and receives a captured image from the camera identified by the first identification information; and a recognition unit that performs the image recognition process identified by the second identification information for the received captured image, wherein the communication unit transmits information indicating a result of the image recognition process identified by the second identification information to a designated apparatus.

Exemplary embodiments of the present invention also provide an image recognition method performed in an image recognition system including at least one camera and a server apparatus, comprising: a step of allowing the server apparatus to receive an image recognition request including first identification information for identifying the camera and second identification information for identifying an image recognition process; a step of allowing the server apparatus to transmit an image capture request to the camera identified by the first identification information; a step of allowing the server apparatus to receive a captured image from the camera identified by the first identification information; a step of allowing the server apparatus to perform the image recognition process identified by the second identification information for the received captured image; and a step of allowing the server apparatus to transmit information indicating a result of the image recognition process identified by the second identification information to a designated apparatus.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating an example of the structure of an image recognition system according to an embodiment of the present invention;
FIG. 2 is a diagram illustrating an example of the structure of a camera according to the embodiment;
FIG. 3 is a diagram illustrating an example of the structure of an image recognition server apparatus according to the embodiment;
FIG. 4A is a diagram illustrating an example of a learning image;
FIG. 4B is a diagram illustrating an example of the learning image;
FIG. 4C is a diagram illustrating an example of the learning image;
FIG. 5A is a diagram illustrating an example of a normal image;
FIG. 5B is a diagram illustrating an example of an abnormal image;
FIG. 5C is a diagram illustrating an example of the abnormal image;
FIG. 6 is a diagram illustrating an example of an abnormal image;
FIG. 7 is a flowchart illustrating an example of an image recognition method of the image recognition server apparatus according to the embodiment;
FIG. 8 is a flowchart illustrating an example of an image capture method of the camera according to the embodiment;
FIG. 9 is a flowchart illustrating an example of an image learning method of the image recognition server apparatus according to the embodiment;
FIG. 10 is a flowchart illustrating an example of a learning image capture method of the camera according to the embodiment;
FIG. 11 is a flowchart illustrating an example of an image recognition method of the image recognition server apparatus according to the embodiment;
FIG. 12 is a flowchart illustrating an example of a captured image storage method of the camera according to the embodiment;
FIG. 13 is a diagram illustrating an example of the hardware configuration of the camera according to the embodiment; and
FIG. 14 is a diagram illustrating an example of the hardware configuration of the image recognition server apparatus according to the embodiment.

### DETAILED DESCRIPTION OF THE PREFERRED EMBODIMENTS

Hereinafter, embodiments of an image recognition system and an image recognition method will be described in detail with reference to the accompanying drawings.

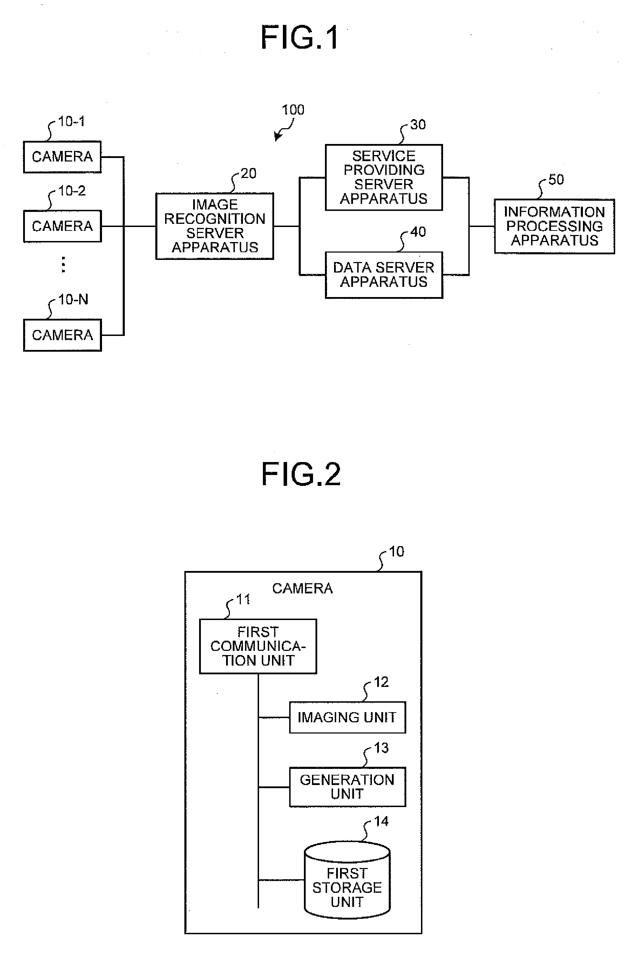

FIG. 1 is a diagram illustrating an example of the structure of an image recognition system 100 according to an embodiment of the present invention. The image recognition system 100 according to the embodiment includes a camera 10-1, a camera 10-2, ···, a camera 10-N (N is an integer equal to or greater than 1), an image recognition server apparatus 20, a service providing server apparatus 30, a data server apparatus 40, and an information processing apparatus 50.

The camera 10-1, the camera 10-2, ···, the camera 10-N are connected to the image recognition server apparatus 20 so as to communicate with the image recognition server apparatus 20. Hereinafter, when the camera 10-1, the camera 10-2, ···, the camera 10-N do not need to be distinguished from each other, they are referred to as cameras 10. Any number of cameras 10 may be provided. The image recognition server apparatus 20, the service providing server apparatus 30, and the data server apparatus 40 are connected so as to communicate with each other. The service providing server apparatus 30, the data server apparatus 40, and the information processing apparatus 50 are connected so as to communicate with each other.

The camera 10-1, the camera 10-2, ..., the camera 10-N, the image recognition server apparatus 20, the service providing server apparatus 30, the data server apparatus 40, and the information processing apparatus 50 may be connected to the same network so as to communicate with each other. A communication method may be a wireless method, a wired method, or a combination of the wireless method and the wired method.

The camera 10 captures an image of a place where the camera 10 is installed and acquires a captured image. The camera 10 may capture an image using any imaging method. The camera 10 is, for example, a camera which captures a color image, a camera which captures a monochrome image, a camera which captures a spectral image, a camera which captures a polarized image, a stereo camera which acquires distance information, or a camera which measures time of flight (TOF). The structure of the camera 10 will be described in detail below.

When receiving an image recognition request from the service providing server apparatus 30, the image recognition server apparatus 20 performs an image recognition process for the captured image in response to the image recognition request. The image recognition process is a process of recognizing information from the captured image. The image recognition process is, for example, a process of recognizing the number of vehicles in the captured image and a process of recognizing the number of human faces in the captured image. The image recognition server apparatus 20 transmits information indicating the result of the image recognition process to a designated apparatus such as the service providing server apparatus 30 or the data server apparatus 40. The structure of the image recognition server apparatus 20 will be described in detail below.

The service providing server apparatus 30 provides services to the user of the information processing apparatus 50. The service providing server apparatus 30 may provide any services. The services include, for example, a service to investigate the number of vehicles traveling on the road and a service to recognize whether there is a person around.

The data server apparatus 40 stores therein the result of the image recognition process by the image recognition server apparatus 20.

The information processing apparatus 50 acquires information indicating the result of the image recognition process by the image recognition server apparatus 20 from the service providing server apparatus 30 or the data server apparatus 40.

First, the structure of the camera 10 will be described in detail.

FIG. 2 is a diagram illustrating an example of the structure of the camera 10 according to the embodiment. The camera 10 according to the embodiment includes a first communication unit 11, an imaging unit 12, a generation unit 13, and a first storage unit 14.

### Operation When Image Capture Request Is Received

When an image capture request is received from the image recognition server apparatus 20, the first communication unit 11 inputs the image capture request to the imaging unit 12. The image capture request includes a recognition process ID (second identification information) for identifying the image recognition process and timing information indicating the time when an image is captured.

The timing information includes, for example, an imaging designation time and an imaging cycle. When a moving image is captured as the image, the timing information also includes an imaging time. The imaging cycle is, for example, 10 seconds. The imaging time is, for example, 30 minutes. The image capture request may not include the timing information and the image capture request may be received from the image recognition server apparatus 20 each time an image is captured.

When receiving the image capture request from the first communication unit 11, the imaging unit 12 performs an imaging process at the time indicated by the timing information included in the image capture request to acquire a captured image. In this case, the imaging unit 12 determines an imaging method on the basis of the recognition process ID included in the image capture request. For example, the imaging unit 12 captures a moving image or a still image as the image on the basis of the recognition process ID. The imaging unit 12 inputs the recognition process ID included in the image capture request and the captured image to the generation unit 13.

When receiving the recognition process ID and the captured image from the imaging unit 12, the generation unit 13 changes the data format of the captured image or extracts feature amounts from the captured image according to the recognition process ID to generate information based on the captured image. In addition, the generation unit 13 may perform both the change in the data format of the captured image and the extraction of the feature amounts according to the recognition process ID to generate the information based on the captured image. The information based on the captured image may be the captured image.

First, the case in which the data format of the captured image is changed according to the recognition process ID to generate the information based on the captured image will be described.

Specifically, the generation unit 13 changes, for example, the region of the captured image to be transmitted, the gradation of the captured image, the resolution of the captured image, the number of frames in the captured image, and the compression ratio of the captured image (the file format of the captured image such as a bmp format (non-compression), a tif format (lossless compression), and a jpeg format (lossy compression)) according to the recognition process ID to generate the information based on the captured image. Therefore, it is possible to appropriately compress or reduce information related to the captured image according to the image recognition process.

When the captured image whose information has not been compressed or reduced is transmitted from the camera 10 to the image recognition server apparatus 20, none of the information included in the captured image is lost and it is possible to respond to any recognition process. However, since a large amount of data of the captured image is transmitted from the camera 10 to the image recognition server apparatus 20, a response time from the reception of the image recognition request from the service providing server apparatus 30 by the image recognition server apparatus 20 to the transmission of a response by the image recognition server apparatus 20 is long. In addition, since a large amount of data is transmitted through a communication line, a communication cost increases. For this reason, it is preferable to compress or reduce information related to the captured image before the captured image is transmitted.

For example, when the image recognition process indicated by the recognition process ID is a recognition process of recognizing a person in the captured image, the generation unit 13 changes the data format of the captured image to a monochrome format in which the gradation of the captured image is represented by a binary number or a grayscale and generates information based on the captured image.

For example, when the image recognition process indicated by the recognition process ID is a general object recognition process of recognizing the name of an object in the captured image, the generation unit 13 does not change the gradation of the captured image and generates information based on the captured image, without reducing information about the color captured image.

For example, when the image recognition process indicated by the recognition process ID is a recognition process of recognizing the captured image of the same place (direction), the generation unit 13 cuts out a region of the captured image and generates information based on the captured image. The region of the captured image is, for example, a region except for the region which changes little, such as the background, or a predetermined region which is used in the recognition process.

For example, when the image recognition process indicated by the recognition process ID is a recognition process which does not require high-resolution information, the generation unit 13 increases the compression ratio of the captured image or reduces the resolution of the captured image to generate information based on the captured image.

For example, when the image recognition process indicated by the recognition process ID is a recognition process of recognizing the motion of a person waving a hand, the generation unit 13 changes the data format of the captured image to a moving image or a plurality of still images and performs an appropriate compression process for the moving image or the plurality of still images to generate information based on the captured image.

Next, a case in which the feature amounts of the captured image are extracted according to the recognition process ID to generate the information based on the captured image will be described.

Specifically, the generation unit 13 extracts, for example, scale-invariant feature transform (SIFT), speeded up robust features (Surf), Haar-like features, or histograms of oriented gradients (HOG) features from the captured image according to the recognition process ID.

For example, when the image recognition process indicated by the recognition process ID is the recognition process of recognizing a person in the captured image, the generation unit 13 extracts HOG features from the captured image and generates the information based on the captured image.

The generation unit 13 inputs the information based on the captured image to the first communication unit 11. When receiving the information based on the captured image from the generation unit 13, the first communication unit 11 encodes the information based on the captured image and transmits the encoded information based on the captured image to the image recognition server apparatus 20.

### Operation When Learning Image Capture Request Is Received

When a learning image capture request is received from the image recognition server apparatus 20, the first communication unit 11 inputs the learning image capture request to the imaging unit 12. The learning image capture request includes a recognition process ID (second identification information) for identifying an image recognition process and timing information indicating the time when a learning image is captured.

When receiving the learning image capture request from the first communication unit 11, the imaging unit 12 performs an imaging process at the time indicated by the timing information included in the learning image capture request to acquire a learning image. For example, the imaging unit 12 captures a plurality of images as the learning images at an interval of 10 seconds for 60 minutes. The imaging unit 12 inputs the recognition process ID included in the learning image capture request along with the learning image to the generation unit 13.

When receiving the recognition process ID and the learning image from the imaging unit 12, the generation unit 13 changes the data format of the learning image or extracts feature amounts from the learning image according to the recognition process ID to generate information based on the learning image. In addition, the generation unit 13 performs both the change in the data format of the learning image and the extraction of the feature amounts according to the recognition process ID to generate the information based on the learning image. The change in the data format and the extraction of the feature amounts are performed for each of the plurality of captured images included in the learning image. The information based on the learning image may be the learning image (a plurality of captured images).

The generation unit 13 inputs the information based on the learning image to the first communication unit 11. When receiving the information based on the learning image from the generation unit 13, the first communication unit 11 encodes the information based on the learning image and transmits the encoded information based on the learning image to the image recognition server apparatus 20.

### Operation When Image Storage Request Is Received

When an image storage request is received from the image recognition server apparatus 20, the first communication unit 11 inputs the image storage request to the imaging unit 12. The image storage request includes, for example, timing information indicating the time when an image is captured and the frame rate of the captured image.

When receiving the image storage request from the first communication unit 11, the imaging unit 12 performs an imaging process at the time indicated by the timing information in the image storage request and acquires a captured image. The time indicated by the timing information is, for example, 30 minutes after the imaging designation time. The imaging unit 12 stores the captured image in the first storage unit 14.

When the first communication unit 11 receives the image storage request from the image recognition server apparatus 20, the first storage unit 14 stores the image acquired by the imaging unit 12.

Next, the structure of the image recognition server apparatus 20 will be described in detail.

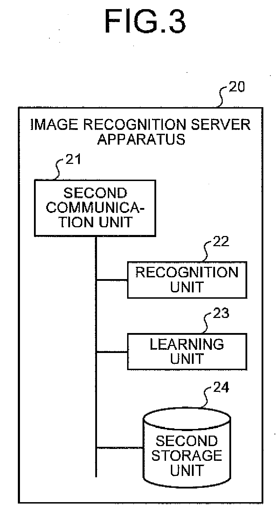

FIG. 3 is a diagram illustrating an example of the structure of the image recognition server apparatus 20 according to the embodiment. The image recognition server apparatus 20 according to the embodiment includes a second communication unit 21, a recognition unit 22, a learning unit 23, and a second storage unit 24.

### Operation When Image Recognition Request Is Received

The second communication unit 21 receives an image recognition request including the camera ID (first identification information) for identifying the camera 10 and the recognition process ID (second identification information) for identifying the image recognition process from the service providing server apparatus 30. Specifically, the image recognition request is implemented by the calling (execution) of a Web API of the image recognition server apparatus 20 by the service providing server apparatus 30. Here, an example of the Web API of the image recognition request will be described.

For example, when the second communication unit 21 receives http://xxx.yyy.com/mysite/cgi-bin/cameral-face.cgi from the service providing server apparatus 30, "camera1" indicates that the camera ID is 1 and "face" indicates an image recognition process of recognizing the number of faces from the captured image. In addition, "camera1-face.cgi" indicates a common gateway interface (CGI) program which performs the image recognition process of recognizing the number of faces from the captured image and includes information such as parameters used in the image recognition process.

For example, when the second communication unit 21 receives http://xxx.yyy.com/mysite/cgi-bin/camera2-human.cgi from the service providing server apparatus 30, "camera2" indicates that the camera ID is 2 and "human" indicates an image recognition process of recognizing the number of persons from the captured image. In addition, "camera2-human.cgi" indicates a CGI program which performs the image recognition process of recognizing the number of persons from the captured image and includes information such as parameters used in the image recognition process.

For example, when the second communication unit 21 receives http://xxx.yyy.com/mysite/cgi-bin/camera3-god.cgi from the service providing server apparatus 30, "camera3" indicates that the camera ID is 3 and "god" indicates an image recognition process of recognizing the name of an object in the captured image. In addition, "camera3-god.cgi" indicates a CGI program which performs the image recognition process of recognizing the name of the object in the captured image and includes information such as parameters used in the image recognition process.

When an image recognition request (the calling of a Web API) is received from the service providing server apparatus 30, the second communication unit 21 transmits the image capture request to the camera 10 identified by the camera ID in the image recognition request. In this case, the second communication unit 21 may insert setting information when the camera 10 captures an image and timing information indicating the time when an image is captured into the image capture request. For example, when the camera 10 is a camera which captures an image in a dark place, the setting information is information indicating the turn-on of a flash lamp of the camera 10 when an image is captured. Therefore, it is possible to turn off the flash lamp of the camera 10 except when an image is captured and thus to reduce the power consumption of the camera 10. In addition, the timing information may be set in the image capture request according to the Web API of the image recognition request or predetermined timing information may be set in the image capture request.

When the encoded information based on the captured image is received as a response to the image capture request from the camera 10, the second communication unit 21 decodes the encoded information based on the captured image and inputs the information based on the captured image along with the camera ID and the recognition process ID to the recognition unit 22.

When receiving the information based on the captured image, the camera ID, and the recognition process ID from the second communication unit 21, the recognition unit 22 performs the image recognition process identified by the recognition process ID. In this case, the recognition unit 22 performs an image recognition process that is most suitable for the imaging method of the camera 10. Specifically, the recognition unit 22 stores, for example, imaging method information in which the camera ID is associated with the imaging method of the camera and parameter information in which the imaging method of the camera is associated with parameters. The recognition unit 22 specifies the imaging method of the camera 10 on the basis of the imaging method information and the camera ID received from the second communication unit 21. Then, the recognition unit 22 determines the optimum parameters used for the image recognition process for the image captured by the camera 10, on the basis of the parameter information and the specified imaging method of the camera 10, and performs an image recognition process that is most suitable for the imaging method of the camera 10.

The recognition unit 22 inputs information indicating the result of the image recognition process to the second communication unit 21. In this case, the recognition unit 22 does not insert information which can specify personal information included in the captured image into the information indicating the result of the image recognition process. For example, when the number of persons in the captured image is obtained as the result of the image recognition process, the recognition unit 22 does not insert the captured image into the result of the image recognition process and inserts only text information indicating the number of persons into the result of the image recognition process. Therefore, it is possible to prevent the invasion of the privacy of the person in the captured image.

When receiving the information indicating the result of the image recognition process from the recognition unit 22, the second communication unit 21 transmits the information indicating the result of the image recognition process to a designated apparatus such as the service providing server apparatus 30 or the data server apparatus 40. Specifically, the second communication unit 21 transmits the information indicating the result of the image recognition process to a designated apparatus, such as the service providing server apparatus 30 or the data server apparatus 40, using the Web API.

The apparatus, which is the transmission destination of the result of the image recognition process, may be arbitrarily determined according to, for example, the type of image recognition service or the user who is provided with services. In addition, the Web API which transmits the information indicating the result of the image recognition process may have any format. For example, the format of the Web API which transmits the information indicating the result of the image recognition process is an xml format, a JSON format, or a CSV format. When receiving the information indicating the result of the image recognition process from the image recognition server apparatus 20, the service providing server apparatus 30 performs a process corresponding to the information indicating the result of the image recognition process. The process corresponding to the information indicating the result of the image recognition process may be arbitrary. For example, the process corresponding to the information indicating the result of the image recognition process is a process of transmitting mail to the mail address which has been registered in advance by the user and a process of driving a mechanism such that the door is unlocked.

### Operation When Learning Request Is Received

The second communication unit 21 receives a learning request including the camera ID (first identification information) for identifying the camera 10, timing information indicating the time when the learning image is captured, and a learning result ID for identifying learning result information from the service providing server apparatus 30. Specifically, the learning request is implemented by the calling (execution) of the Web API of the image recognition server apparatus 20 by the service providing server apparatus 30. Here, an example of the Web API of the learning request will be described.

For example, a case in which the second communication unit 21 receives "http://xxx.yyy.com/mysite/cgi-bin/learning?camera=1&time=1&timewid=600&result=1" from the service providing server apparatus 30 will be described. In this case, "camera=1" indicates that the camera ID is 1 and "time=1" indicates that an imaging cycle is 1 second. In addition, "timewid=600" indicates that the time for which the learning image is acquired is 600 minutes and "result=1" indicates that the learning result ID for identifying learning result information is 1. The learning result ID is associated with environmental information, which will be described below, which makes it possible to use the learning image according to the surrounding environment of the camera 10.

When a learning request (the calling of the Web API) is received from the service providing server apparatus 30, the second communication unit 21 transmits the learning image capture request to the camera 10 identified by the camera ID. Then, when the encoded information based on the learning image is received from the camera 10, the second communication unit 21 decodes the encoded information based on the learning image and inputs the information based on the learning image to the learning unit 23.

When receiving the information based on the learning image from the second communication unit 21, the learning unit 23 acquires learning result information for specifying a normal image indicating that the captured image is normal, using the information based on the learning image. Here, a case in which the information based on the learning image as an example of the learning result information is the learning image (a plurality of captured images) will be described.

First, the learning unit 23 acquires one of the plurality of captured images included in the learning image and divides the captured image into meshes of 64x64 pixels. Then, the learning unit 23 calculates an RGB brightness histogram for each mesh. Then, the learning unit 23 integrates the RGB brightness histogram of each mesh in all of the captured images included in the learning image. The learning unit 23 uses the RGB brightness histogram integrated for each mesh as the learning result information.

The learning unit 23 may add a predetermined amount of noise to the plurality of captured images used as the learning image so as to prevent the over-adaptation of the image recognition of the recognition unit 22 to only the learning image used for learning and then learn the normal image indicating that the captured image is normal.

Next, an example of the learning image will be described.

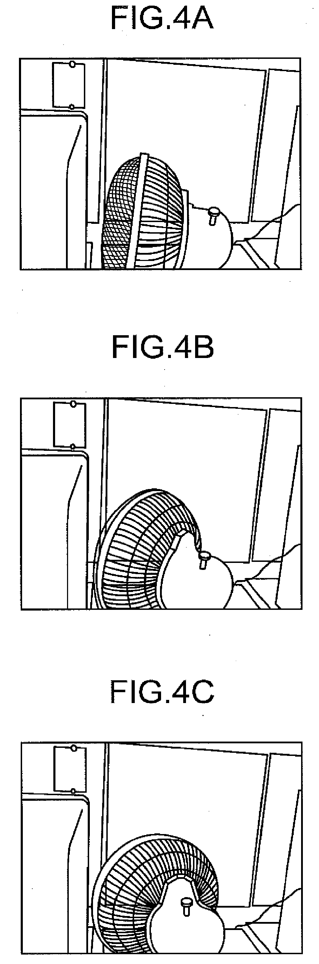

FIGS. 4A to 4C are diagrams illustrating examples of the learning image. In the examples illustrated in FIGS. 4A to 4C, three captured images in the learning image including a plurality of (for example, 50) captured images are illustrated. An electric fan included in the captured image operates while the head thereof is moving from side to side. The learning unit 23 learns this state as the normal image, using the learning image including the plurality of captured images.

Returning to FIG. 3, the learning unit 23 stores the learning result ID for identifying the learning result information, the learning result information for specifying the normal image, the learning image including a plurality of captured images, and environmental information indicating the surrounding environment of the camera 10 when the learning image is acquired in the second storage unit 24 so as to be associated with each other. The environmental information is, for example, the imaging time, hour, and season when the learning image is acquired. Examples of the hour include day, night, morning, and afternoon. For the image captured by the camera 10, the surrounding environment varies depending on the imaging time and the season. Therefore, the learning unit 23 stores the learning image and the learning result information in the second storage unit 24 so as to be associated with the environmental information.

Next, an image recognition process using the learning image will be described.

### Image Recognition Process Using Learning Image

The second communication unit 21 receives the image recognition request including the camera ID (first identification information) for identifying the camera 10, the recognition process ID (second identification information) for identifying the image recognition process, and the learning result ID for identifying the learning result information from the service providing server apparatus 30. Here, an example of the Web API of the image recognition request using the learning image will be described.

For example, when the second communication unit 21 receives http://xxx.yyy.com/mysite/cgi-bin/anomaly_detect?camera=1&result=1 from the service providing server apparatus 30, "anomaly_detect" indicates the image recognition process using the learning image, "camera=1" indicates that the camera ID is 1, and "result=1" indicates the use of the learning result information in which the learning result ID is 1.

For example, when the second communication unit 21 receives "http://xxx.yyy.com/mysite/cgi-bin/anomaly_detect?camera=2&result=3&time=10" from the service providing server apparatus 30, "anomaly_detect" indicates the image recognition process using the learning image, "camera=2" indicates that the camera ID is 2, and "result=3" indicates the use of the learning result information in which the learning result ID is 3. In addition, "time=10" indicates that the image recognition process using the learning image is performed at an interval of 10 seconds.

The use of the image recognition request (Web API) makes it possible to easily achieve an abnormality detection service corresponding to an environment including, for example, various disturbances, regardless of the position of the camera 10.

When the image recognition request (the calling of the Web API) is received from the service providing server apparatus 30, the second communication unit 21 transmits the image capture request to the camera 10 identified by the camera ID in the image recognition request.

When the encoded information based on the captured image is received as a response to the image capture request from the camera 10, the second communication unit 21 decodes the encoded information based on the captured image and inputs the information based on the captured image along with the camera ID and the recognition process ID to the recognition unit 22.

When the image recognition process identified by the recognition process ID is a recognition process of recognizing an abnormal image indicating that the captured image is abnormal, the recognition unit 22 compares the learning result information indicating the normal image with the information based on the captured image to recognize whether or not the information based on the captured image is an abnormal image.

Here, for an example of a method for recognizing whether or not the information based on the captured image is an abnormal image, a case in which the information based on the captured image is the captured image will be described in detail.

First, the recognition unit 22 acquires one of the captured images and divides the captured image into meshes of 64x64 pixels. Then, the recognition unit 22 calculates an RGB brightness histogram for each mesh. Then, the recognition unit 22 acquires the learning result information identified by the learning result ID included in the image recognition request from the second storage unit 24. Then, the recognition unit 22 calculates a local outlier factor (LOF) value, using the RGB brightness histogram calculated from the captured image and the RGB brightness histogram included in the learning result information. Then, when there is a mesh in which the LOF value is equal to or greater than a predetermined threshold value among the meshes of the captured image, the recognition unit 22 recognizes that the captured image is an abnormal image.

In this case, the recognition unit 22 can perform an optimum image recognition process, using the learning result information identified by the learning result ID which is associated with the environmental information corresponding to, for example, the imaging time or season of the captured image to be subjected to image recognition. For example, when the captured image is an outdoor image, it is possible to perform an image recognition process that is most suitable for the surrounding environment of the camera 10.

In the above-mentioned example, the recognition unit 22 uses the LOF, which is a semi-supervised abnormality detection algorithm, as the method for recognizing an abnormal image. The LOF is a method which detects an outlier according to the density of the existing samples in the vicinity of the sample to be identified. It has been know that this method can more accurately detect the outlier than a method which simply uses the distance to the closest sample.

The recognition unit 22 may recognize the abnormal image using any method other than the LOF. The recognition unit 22 may use, for example, a 1-class support vector machine (SVM). The 1-class SVM changes an evaluation function for SVM which is well known as a classifier and is used as a classifier using the semi-supervised abnormality detection algorithm. The 1-class SVM can perform classification using only a support vector as long as it can successfully perform learning. Therefore, the 1-class SVM can perform classification at a higher speed than the LOF.

The recognition unit 22 may be used in a method which also treats the abnormal image as the learning result information and recognizes the abnormal image using a supervised learning algorithm such as SVM.

Next, an example of an abnormal image recognition process using the learning images illustrated in FIGS. 4A to 4C will be described in detail.

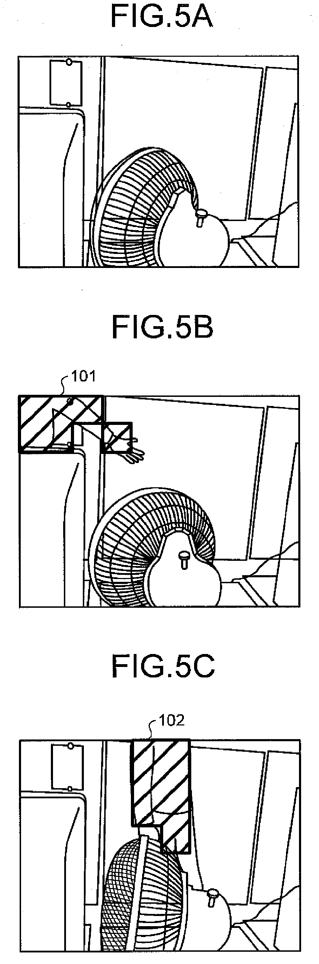

FIG. 5A is a diagram illustrating an example of the normal image. FIG. 5A illustrates an image that is captured in a state in which an electric fan operates while the head thereof is moving from side to side and this state has been learned using the learning images illustrated in FIGS. 4A to 4C. Therefore, the recognition unit 22 recognizes the captured image illustrated in FIG. 5A as a normal image.

FIGS. 5B and 5C are diagrams illustrating examples of the abnormal image. FIGS. 5B and 5C illustrate images that are captured in a state in which a person is present in the imaging range and this state has not been learned. Therefore, the recognition unit 22 recognizes the captured images illustrated in FIGS. 5B and 5C as abnormal images. Specifically, the recognition unit 22 detects abnormality in a block represented by a mesh region 101 in FIG. 5B and a block represented by a mesh region 102 in FIG. 5C and recognizes the captured images as abnormal images.

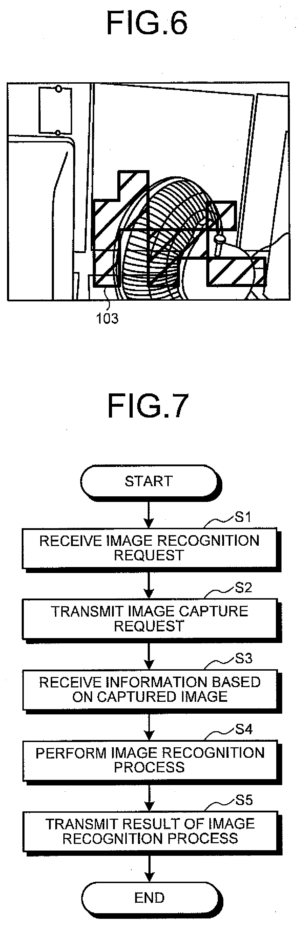

FIG. 6 is a diagram illustrating an example of the abnormal image. FIG. 6 illustrates an image that is captured in a state in which the position of the electric fan shifts to the left side and this state has not been learned. Therefore, the recognition unit 22 recognizes the captured image illustrated in FIG. 6 as an abnormal image. Specifically, the recognition unit 22 detects abnormality in a block represented by a mesh region 103 in FIG. 6 and recognizes the captured image as an abnormal image.

In general, in the case in which the electric fan operates as illustrated in FIG. 5A to FIG. 6, it is difficult to use a method which determines the captured image to be abnormal when there is a movement as compared to the captured image of the previous frame, and a method is used which excludes an electric fan region from a recognition target and performs whether the captured image is abnormal. However, in this case, it is necessary to set the region to be excluded in advance. Therefore, as in the example illustrated in FIG. 6, when the position of the electric fan moves, it is difficult to detect abnormality.

In the case in which the captured image is determined to be abnormal when there is a movement in the captured image, as compared to the captured image of the previous frame, for example, when the sun is hidden by the clouds outdoors, when trees are swayed by the wind outdoors, and at the moment a light is turned off indoors, there is a large difference between the captured image of the current frame and the captured image of the previous frame. As a result, the captured image is erroneously determined to be an abnormal image. However, since the learning unit 23 learns the learning image including the captured images having these scenes, it is possible to perform image recognition that is most suitable for an imaging environment, without setting, for example, the parameters of the image recognition process. In the above description, the information in which the electric fan operates is given as an example. However, in the actual example, when the service providing server apparatus 30 provides a security service and an alert service, the image recognition process using the learning image is performed.

Specifically, in the case of the security service, the learning unit 23 learns a normal image using the learning image (a plurality of captured images) which is captured by the outdoor camera 10 under the usual conditions in which there is no person. For example, when a person is recognized from the image which is captured by the camera 10 at night, the recognition unit 22 recognizes the captured image as an abnormal image. In the case of the alert service, the learning unit 23 learns a normal image, using the learning image (a plurality of captured images) obtained by capturing the movement of a robot arm using the indoor camera 10. For example, when it is recognized that there is a person in the vicinity of the robot arm from the image captured by the camera 10, the recognition unit 22 recognizes the captured image as an abnormal image.

When it is recognized that the captured image is an abnormal image by the image recognition process of the recognition unit 22, the second communication unit 21 transmits information indicating the result of the image recognition process to a designated apparatus, such as the service providing server apparatus 30 or the data server apparatus 40, and transmits the image storage request to the camera 10 which has captured the image.

When an abnormal image is recognized by the recognition unit 22, for example, the captured image can be stored as a moving image with a high frame rate for a predetermined period of time after the recognition of the abnormal image in the camera 10. For example, the captured image in which a suspicious person appears can be stored in time series. Therefore, the user can analyze the captured image later.

Next, the image recognition method according to the embodiment will be described.

FIG. 7 is a flowchart illustrating an example of the image recognition method of the image recognition server apparatus 20 according to the embodiment. First, the second communication unit 21 receives the image recognition request including the camera ID (first identification information) for identifying the camera 10 and the recognition process ID (second identification information) for identifying the image recognition process from the service providing server apparatus 30, using the Web API (Step S1).

Then, the second communication unit 21 transmits the image capture request including the recognition process ID (second identification information) included in the image recognition request and the timing information indicating the time when an image is captured to the camera 10 identified by the camera ID included in the image recognition request (Step S2). The timing information may be set in the image capture request by the second communication unit 21 according to the Web API of the image recognition request or predetermined timing information may be set in the image capture request by the second communication unit 21. In addition, the timing information may not be included in the image capture request and the image capture request may be received from the image recognition server apparatus 20 each time an image is captured.

Then, the second communication unit 21 receives the encoded information based on the captured image as a response to the image capture request from the camera 10 (Step S3). The second communication unit 21 decodes the encoded information based on the captured image and inputs the information based on the captured image, the camera ID, and the recognition process ID to the recognition unit 22.

Then, when receiving the information based on the captured image, the camera ID, and the recognition process ID from the second communication unit 21, the recognition unit 22 performs the image recognition process identified by the recognition process ID (Step S4). In this case, the recognition unit 22 specifies the image recognition process that is most suitable for the imaging method of the camera 10 from the camera ID and performs the image recognition process that is most suitable for the information based on the captured image.

Then, the second communication unit 21 transmits information indicating the result of the image recognition process to a designated apparatus such as the service providing server apparatus 30 or the data server apparatus 40 (Step S5).

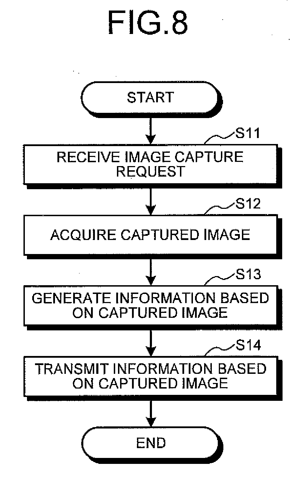

FIG. 8 is a flowchart illustrating an example of the image capture method of the camera 10 according to the embodiment. First, the first communication unit 11 receives the image capture request from the image recognition server apparatus 20 (Step S11). The image capture request includes the recognition process ID (second identification information) and the timing information indicating the time when an image is captured.

Then, when receiving the image capture request from the first communication unit 11, the imaging unit 12 captures an image at the time indicated by the timing information in the image capture request and acquires a captured image (Step S12). Then, when receiving the recognition process ID and the captured image from the imaging unit 12, the generation unit 13 changes the data format of the captured image or extracts feature amounts from the captured image according to the recognition process ID to generate information based on the captured image (Step S13). Then, when receiving the information based on the captured image from the generation unit 13, the first communication unit 11 encodes the information based on the captured image and transmits the information based on the captured image to the image recognition server apparatus 20 (Step S14).

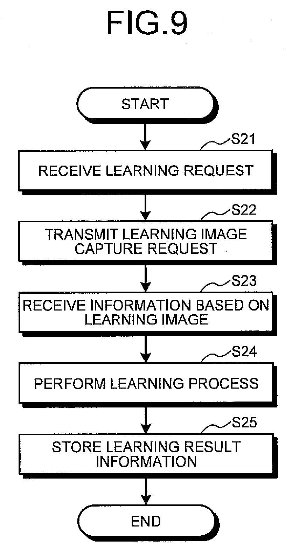

FIG. 9 is a flowchart illustrating an example of the image learning method of the image recognition server apparatus 20 according to the embodiment. First, the second communication unit 21 receives the learning request including the camera ID (first identification information) for identifying the camera 10, the timing information indicating the time when the learning image is captured, and the learning result ID for identifying the learning result information from the service providing server apparatus 30, using the Web API (Step S21).

Then, the second communication unit 21 transmits the leading image capture request including the recognition process ID (second identification information) and the timing information indicating the time when the learning image is captured to the camera 10 identified by the camera ID included in the learning request (Step S22).

Then, the second communication unit 21 receives the encoded information based on the learning image from the camera 10 (Step S23). The second communication unit 21 decodes the encoded information based on the learning image and inputs the information based on the learning image to the learning unit 23.

Then, when receiving the information based on the learning image from the second communication unit 21, the learning unit 23 performs a learning process, using the information based on the learning image, to acquire learning result information for specifying a normal image indicating that the captured image is normal (Step S24).

Then, the learning unit 23 stores the learning result ID for identifying the learning result information, the learning result information for specifying a normal image, the learning image including a plurality of captured images, and the environmental information indicating the surrounding environment of the camera 10 when the learning image is acquired in the second storage unit 24 so as to be associated with each other (Step S25).

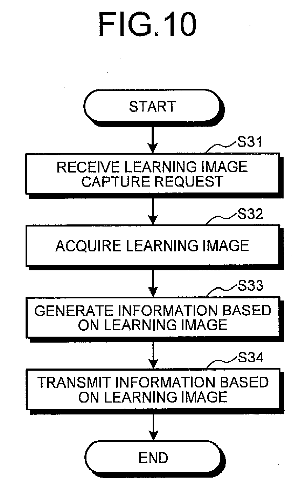

FIG. 10 is a flowchart illustrating an example of the learning image capture method of the camera 10 according to the embodiment. First, the first communication unit 11 receives the learning image capture request from the image recognition server apparatus 20 (Step S31). The learning image capture request includes the recognition process ID (second identification information) for identifying the image recognition process and the timing information indicating the time when the learning image is captured.

When receiving the learning image capture request from the first communication unit 11, the imaging unit 12 performs an imaging process at the time indicated by the timing information in the learning image capture request to acquire the learning image (Step S32). Then, when receiving the recognition process ID and the learning image from the imaging unit 12, the generation unit 13 changes the data format of the learning image or extracts feature amounts from the learning image according to the recognition process ID to generate information based on the learning image (Step S33). Then, when receiving the information based on the learning image from the generation unit 13, the first communication unit 11 encodes the information based on the learning image and transmits the encoded information based on the learning image to the image recognition server apparatus 20 (Step S34).

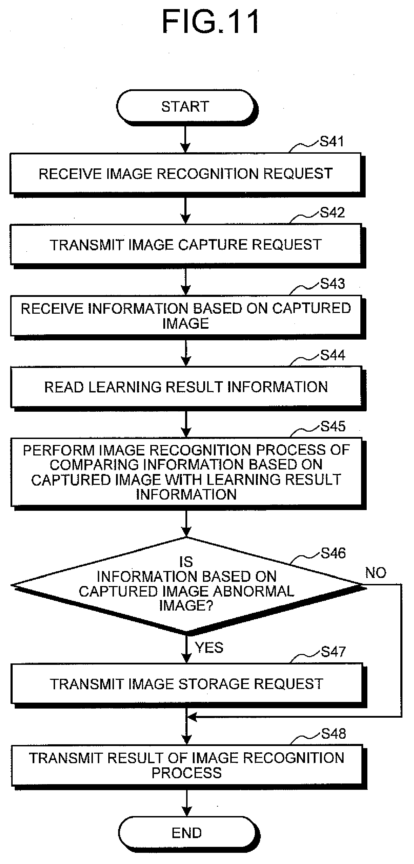

FIG. 11 is a flowchart illustrating an example of the image recognition method of the image recognition server apparatus 20 according to the embodiment. First, the second communication unit 21 receives the image recognition request including the camera ID (first identification information) for identifying the camera 10, the recognition process ID (second identification information) for identifying the image recognition process, and the learning result ID for identifying the learning result information from the service providing server apparatus 30, using the Web API (Step S41).

Then, the second communication unit 21 transmits the image capture request including the recognition process ID (second identification information) included in the image recognition request and the timing information indicating the time when an image is captured to the camera 10 identified by the camera ID included in the image recognition request (Step S42). The timing information may be set in the image capture request by the second communication unit 21 according to the Web API of the image recognition request or predetermined timing information may be set in the image capture request by the second communication unit 21.

Then, the second communication unit 21 receives the encoded information based on the captured image as a response to the image capture request from the camera 10 (Step S43). Then, the learning result information identified by the learning result ID which is included in the image recognition request received in Step S41 is read from the second storage unit 24 (Step S44).

Then, the recognition unit 22 compares the learning result information indicating the normal image with the captured image to recognize whether or not the captured image is an abnormal image (Step S45).

When the information based on the captured image is an abnormal image (Step S46, Yes), the second communication unit 21 transmits an image storage request including, for example, the timing information indicating the time when the image is captured and the frame rate of the captured image to the camera 10 which has transmitted the information based on the captured image (Step S47) and transmits information indicating the result of the image recognition process to a designated apparatus such as the service providing server apparatus 30 or the data server apparatus 40 (Step S48).

When the information based on the captured image is not an abnormal image (Step S46, No), the second communication unit 21 transmits information indicating the result of the image recognition process to a designated apparatus such as the service providing server apparatus 30 or the data server apparatus 40 (Step S48).

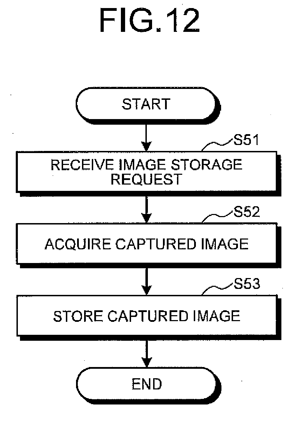

FIG. 12 is a flowchart illustrating an example of a captured image storage method of the camera 10 according to the embodiment. First, the first communication unit 11 receives an image storage request from the image recognition server apparatus 20 (Step S51). The image storage request includes, for example, the timing information indicating the time when an image is captured and the frame rate of the captured image. When receiving the image storage request from the first communication unit 11, the imaging unit 12 performs an imaging process at the time indicated by the timing information in the image storage request to capture an image (Step S52). Then, the first storage unit 14 stores the image captured by the imaging unit 12 (Step S53).

Finally, an example of the hardware configuration of the camera 10 and the image recognition server apparatus 20 according to the embodiment will be described.

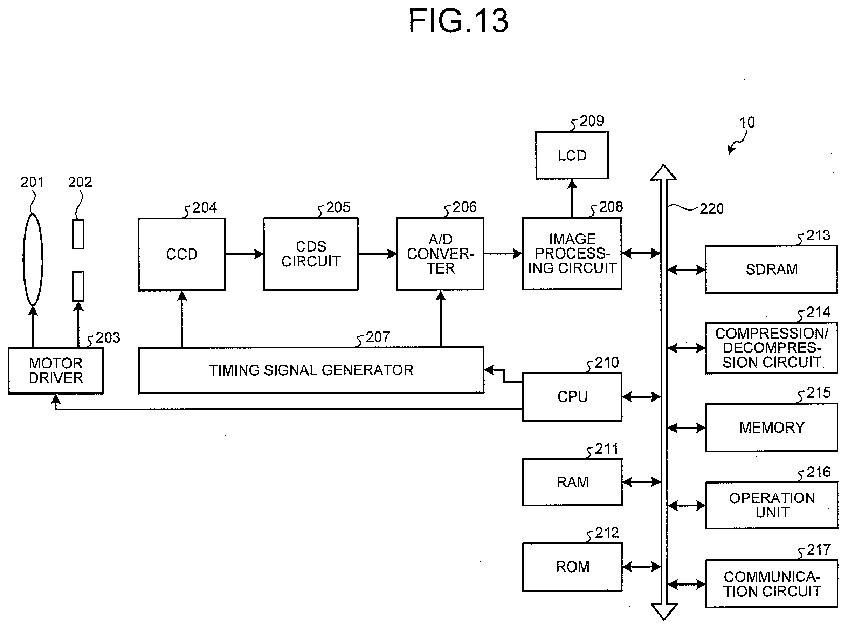

FIG. 13 is a diagram illustrating an example of the hardware configuration of the camera 10 according to the embodiment. The camera 10 according to the embodiment includes an imaging optical system 201, a mechanical shutter 202, a motor driver 203, a charge coupled device (CCD) 204, a correlated double sampling (CDS) circuit 205, an A/D converter 206, a timing signal generator 207, an image processing circuit 208, a liquid crystal display (LCD) 209, a central processing unit (CPU) 210, random access memory (RAM) 211, read only memory (ROM) 212, synchronous dynamic random access memory (SDRAM) 213, a compression/decompression circuit 214, a memory 215, an operation unit 216, and a communication circuit 217.

The image processing circuit 208, the CPU 210, the RAM 211, the ROM 212, the SDRAM 213, the compression/decompression circuit 214, the memory 215, the operation unit 216, and the communication circuit 217 are connected to each other through a bus 220.

The imaging optical system 201 focuses light reflected from an object. The mechanical shutter 202 is opened for a predetermined period of time such that the light focused by the imaging optical system 201 is incident on the CCD 204. The motor driver 203 drives the imaging optical system 201 and the mechanical shutter 202.

The CCD 204 forms an object image, using the light which is incident through the mechanical shutter 202, and inputs analog image data indicating the object image to the CDS circuit 205. When receiving the analog image data from the CCD 204, the CDS circuit 205 removes a noise component from the image data and inputs the analog image data from which the noise component has been removed to the A/D converter 206. When receiving the analog image data from the CDS circuit 205, the A/D converter 206 converts the analog image data into digital image data. The A/D converter 206 inputs the digital image data to the image processing circuit 208. The timing signal generator 207 transmits a timing signal to the CCD 204, the CDS circuit 205, and the A/D converter 206 on the basis of a control signal from the CPU 210 to control the operation timing of the CCD 204, the CDS circuit 205, and the A/D converter 206.

When receiving the digital image data from the A/D converter 206, the image processing circuit 208 performs image processing for the digital image data, using the SDRAM 213. Examples of the image processing include a CrCb conversion process, a white balance control process, a contrast correction process, an edge enhancement process, and a color conversion process. The white balance control process is image processing for adjusting the depth of colors in the image data. The contrast correction process is image processing for adjusting the contrast of the image data. The edge enhancement process is image processing for adjusting the sharpness of the image data. The color conversion process is image processing for adjusting the color of the image data.

The image processing circuit 208 inputs the image data subjected to the image processing to the LCD 209 or the compression/decompression circuit 214. The LCD 209 is a liquid crystal display which displays the image data received from the image processing circuit 208.

The CPU 210 executes a program to control the operation of the camera 10. The RAM 211 is a work area when the CPU 210 executes the program and a readable/writable storage area which is used to store various kinds of data. The ROM 212 is a read only storage area which stores, for example, the program executed by the CPU 210.

The SDRAM 213 is a storage area which temporarily stores image data to be processed when the image processing circuit 208 performs image processing.

When receiving the image data from the image processing circuit 208, the compression/decompression circuit 214 compresses the image data. The compression/decompression circuit 214 stores the compressed image data in the memory 215. When receiving image data from the memory 215, the compression/decompression circuit 214 decompresses the image data. The image data decompressed by the compression/decompression circuit 214 is temporarily stored on the SDRAM 213. The memory 215 stores the compressed image data.

The operation unit 216 receives an operation from the user of the camera 10. The communication circuit 217 transmits, for example, the information based on the captured image and the information based on the learning image from the camera 10 to the image recognition server apparatus 20.

The first communication unit 11 illustrated in FIG. 2 corresponds to the communication circuit 217. The generation unit 13 corresponds to the image processing circuit 208 and the compression/decompression circuit 214. One or both of some functions of the first communication unit 11 (except for a communication IF which should be implemented by hardware) and the generation unit 13 may be implemented by a program.

The program executed by the camera 10 (CPU 210) according to the embodiment is recorded as an installable or executable file on a computer-readable recording medium, such as a CD-ROM, a memory card, a CD-R, or a digital versatile disk (DVD), and is provided as a computer program product.

In addition, the program executed by the camera 10 according to the embodiment may be stored in a computer connected to a network, such as the Internet, may be downloaded through the network, and may be provided. Furthermore, the program executed by the camera 10 according to the embodiment may be provided through the network, without being downloaded.

In addition, the program executed by the camera 10 according to the embodiment may be incorporated into, for example, the ROM 212 and then provided.

When the first communication unit 11 and the generation unit 13 are implemented by the program executed by the camera 10 according to the embodiment, the CPU 210 reads the program from, for example, the ROM 212 or the above-mentioned storage medium and executes the program to implement the first communication unit 11 and the generation unit 13 in the RAM 211.

Next, an example of the hardware configuration of the image recognition server apparatus 20, the service providing server apparatus 30, the data server apparatus 40, and the information processing apparatus 50 according to the embodiment will be described. The image recognition server apparatus 20, the service providing server apparatus 30, the data server apparatus 40, and the information processing apparatus 50 have the same hardware configuration. Therefore, the hardware configuration of the image recognition server apparatus 20 will be described as an example.

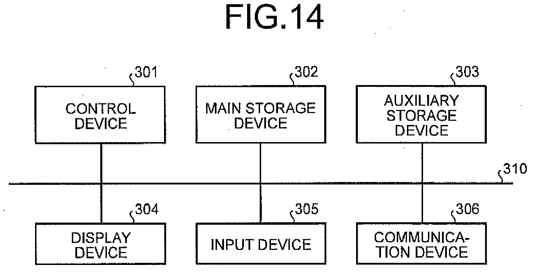

FIG. 14 is a diagram illustrating an example of the hardware configuration of the image recognition server apparatus 20 according to the embodiment. The image recognition server apparatus 20 according to the embodiment includes a control device 301, a main storage device 302, an auxiliary storage device 303, a display device 304, an input device 305, and a communication device 306. The control device 301, the main storage device 302, the auxiliary storage device 303, the display device 304, the input device 305, and the communication device 306 are connected to each other through a bus 310.

The control device 301 executes a program which has been read from the auxiliary storage device 303 to the main storage device 302. The main storage device 302 is a memory including ROM and RAM. The auxiliary storage device 303 is, for example, a hard disk drive (HDD) or an optical drive.

The display device 304 displays, for example, the state of the image recognition server apparatus 20. The display device 304 is, for example, a liquid crystal display. The input device 305 is an interface for operating the image recognition server apparatus 20. The input device 305 is, for example, a keyboard or a mouse. The communication device 306 is an interface for connection to the network.

The program executed by the image recognition server apparatus 20 according to the embodiment is recorded as an installable or executable file on a computer-readable recording medium, such as a CD-ROM, a memory card, a CD-R, or a DVD, and is provided as a computer program product.

In addition, the program executed by the image recognition server apparatus 20 according to the embodiment may be stored in a computer connected to a network, such as the Internet, may be downloaded through the network, and may be provided. Furthermore, the program executed by the image recognition server apparatus 20 according to the embodiment may be provided through the network, without being downloaded.

In addition, the program executed by the image recognition server apparatus 20 according to the embodiment may be incorporated into, for example, the ROM of the main storage device 302 and then provided.

The program executed by the image recognition server apparatus 20 according to the embodiment has a modular structure including the second communication unit 21, the recognition unit 22, and the learning unit 23 illustrated in FIG. 3. The control device 301 reads the program from the storage medium and executes the program to load the second communication unit 21, the recognition unit 22, and the learning unit 23 to the main storage device 302. That is, the second communication unit 21, the recognition unit 22, and the learning unit 23 are generated on the main storage device 302. In addition, some or all of the second communication unit 21, the recognition unit 22, and the learning unit 23 illustrated in FIG. 3 may not be implemented by software and may be implemented by hardware such as an IC.

As described above, in the image recognition system 100 according to the embodiment, when the image recognition request (the calling of the Web API) including the camera ID (first identification information) for identifying the camera 10 and the recognition process ID (second identification information) for identifying the image recognition process is received, the second communication unit 21 of the image recognition server apparatus 20 transmits the image capture request to the camera 10 identified by the camera ID and receives the captured image from the camera 10 identified by the camera ID. Then, the recognition unit 22 performs the image recognition process identified by the recognition process ID for the received captured image. Then, the second communication unit 21 transmits information indicating the result of the image recognition process identified by the recognition process ID to a designated apparatus.

According to the image recognition system 100 according to the embodiment, it is possible to easily provide services using various image recognition processes.

For example, when a service to investigate the amount of traffic is provided, it is necessary to construct a system using, for example, an expensive camera which performs a dedicated recognition process capable of detecting vehicles in the related art. However, it is difficult to use the expensive camera, for traffic survey which is performed while changing the place, in view of having a risk such as being stolen.

In contrast, when the image recognition system 100 according to the embodiment is applied, the inexpensive camera 10 with a standardized function is installed at a traffic measurement point, which makes it possible to provide a traffic survey service. That is, the service providing server apparatus 30 transmits the image recognition request (the calling of the Web API) including the camera ID and a recognition process ID for identifying an image recognition process of recognizing vehicles to the image recognition server apparatus 20, which makes it possible to easily measure the number of vehicles.

For example, the image recognition system 100 is set such that the service providing server apparatus 30 transmits the image recognition request (the calling of the Web API) at an interval of 5 seconds and information indicating the result of the image recognition process is transmitted to the data server apparatus 40. According to this structure, it is possible to easily achieve a statistical application (statistical service) for investigating the amount of traffic. In addition, the recognition process ID included in the image recognition request may be changed to easily use the camera 10 installed at the measurement point for other services.

In the above description, the second storage unit 24 stores the learning result information so as to be associated with the environmental information and the recognition unit 22 reads the learning result information according to the learning result ID (specification information) for specifying the environmental information indicating, for example, the imaging time and season. However, the environmental information indicating, for example, the imaging time and season may be inserted as the dimensions of the feature amount of the learning result information and the recognition unit 22 may perform the image recognition process using the same learning result information.

According to the embodiments of the present invention, it is possible to easily provide services using various image recognition processes.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image recognition system (100) comprising:
at least one camera (10); and
a server apparatus (20),
wherein the camera (10) includes:
an imaging unit (12) that acquires a captured image; and
a first communication unit (11) that transmits the captured image to the server apparatus (20),
the server apparatus (20) includes:
a second communication unit (21) that, when receiving an image recognition request including first identification information for identifying the camera (10) and second identification information for identifying an image recognition process, transmits an image capture request to the camera (10) identified by the first identification information and receives the captured image from the camera (10) identified by the first identification information; and
a recognition unit (22) that performs the image recognition process identified by the second identification information for the received captured image, and
the second communication unit (21) transmits information indicating a result of the image recognition process identified by the second identification information to a designated apparatus.

2. The image recognition system (100) according to claim 1,
wherein the image capture request includes the second identification information,
the camera (10) further includes a generation unit (13) that changes a data format of the captured image according to the second identification information to generate information based on the captured image,
the first communication unit (11) transmits the information based on the captured image to the server apparatus (20), and
the recognition unit (22) performs the image recognition process identified by the second identification information for the received information based on the captured image.

3. The image recognition system (100) according to claim 2,
wherein the generation unit (13) changes at least one of a region of the captured image to be transmitted, the gradation of the captured image, the resolution of the captured image, the number of frames of the captured image, and a compression ratio of the captured image according to the second identification information to generate the information based on the captured image.

4. The image recognition system (100) according to claim 2 or 3,
wherein the generation unit (13) extracts feature amounts corresponding to the second identification information from the captured image to generate the information based on the captured image.

5. The image recognition system (100) according to any one of claims 1 to 4,
wherein the information indicating the result of the image recognition process does not include information which is capable of specifying personal information included in the captured image.

6. The image recognition system (100) according to any one of claims 1 to 5,
wherein the image recognition request further includes timing information indicating a time when the image is captured, and
the imaging unit (12) acquires the captured image at the time indicated by the timing information.

7. The image recognition system (100) according to claim 1,
wherein the server apparatus (20) further includes a learning unit (23) that acquires learning result information for specifying that the captured image is a normal image, by using a learning image including a plurality of the captured images, and
the recognition unit (22) compares the learning result information with the captured image to recognize whether or not the captured image is an abnormal image.

8. The image recognition system (100) according to claim 7,
wherein, when receiving a learning request including the first identification information, the second communication unit (21) transmits a learning image capture request to the camera (10) identified by the first identification information,
when the first communication unit (11) receives the learning image capture request, the imaging unit (12) of the camera (10) identified by the first identification information captures a plurality of the captured images, and
the first communication unit (11) of the camera (10) identified by the first identification information transmits the plurality of captured images as the learning image to the server apparatus (20).

9. The image recognition system (100) according to claim 7 or 8,
wherein the camera (10) further includes a first storage unit (14) that stores the captured images,
when the recognition unit (22) recognizes the abnormal image, the second communication unit (21) transmits an image storage request to the camera (10) which has captured the image detected as the abnormal image, and
when the first communication unit (11) receives the image storage request, the camera (10) which has captured the image detected as the abnormal image stores the captured image in the first storage unit (14).

10. The image recognition system (100) according to any one of claims 7 to 9,
wherein the server apparatus (20) further includes a second storage unit (24) that stores environmental information indicating a surrounding environment of the camera (10) when the learning image is acquired, the learning image, and the learning result information so as to be associated with each other,
the image recognition request includes specification information for specifying the environmental information, and
the recognition unit (22) compares the captured image with the learning result information which is associated with the environmental information specified by the specification information in the image recognition request to recognize whether or not the captured image is an abnormal image.

11. The image recognition system (100) according to any one of claims 7 to 10,
wherein the learning unit (23) adds a predetermined amount of noise to the plurality of captured images used as the learning image and learns the normal image.

12. The image recognition system (100) according to any one of claims 7 to 11,
wherein the recognition unit (22) compares a histogram of brightness of the learning result information with a histogram of brightness of the captured image to recognize whether or not the captured image is an abnormal image.

13. A server apparatus (20) that is connected to at least one camera (10), comprising:
a communication unit (21) that, when receiving an image recognition request including first identification information for identifying the camera (10) and second identification information for identifying an image recognition process, transmits an image capture request to the camera (10) identified by the first identification information and receives a captured image from the camera (10) identified by the first identification information; and
a recognition unit (22) that performs the image recognition process identified by the second identification information for the received captured image,
wherein the communication unit (21) transmits information indicating a result of the image recognition process identified by the second identification information to a designated apparatus.

14. An image recognition method performed in an image recognition system (100) including at least one camera (10) and a server apparatus (20), comprising:
a step of allowing the server apparatus (20) to receive an image recognition request including first identification information for identifying the camera (10) and second identification information for identifying an image recognition process;
a step of allowing the server apparatus (20) to transmit an image capture request to the camera (10) identified by the first identification information;
a step of allowing the server apparatus (20) to receive a captured image from the camera (10) identified by the first identification information;
a step of allowing the server apparatus (20) to perform the image recognition process identified by the second identification information for the received captured image; and
a step of allowing the server apparatus (20) to transmit information indicating a result of the image recognition process identified by the second identification information to a designated apparatus.
